**Europäisches Patentamt**

**European Patent Office**

**Office européen des brevets**

(19)

(11) Veröffentlichungsnummer: **0 090 920**
**B1**

(12) # EUROPÄISCHE PATENTSCHRIFT

(45) Veröffentlichungstag der Patentschrift:
15.01.86

(51) Int. Cl.⁴: **E 21 B 43/22**

(21) Anmeldenummer: **83101069.7**

(22) Anmeldetag: 05.02.83

(54) Verfahren zur Gewinnung von Erdöl aus untertägigen Lagerstätten.

(30) Priorität: 26.03.82 DE 3211168

(43) Veröffentlichungstag der Anmeldung:
12.10.83 Patentblatt 83/41

(45) Bekanntmachung des Hinweises auf die Patenterteilung:
15.01.86 Patentblatt 86/3

(84) Benannte Vertragsstaaten:
AT DE FR GB

(56) Entgegenhaltungen:
EP-A-0 032 072
EP-A-0 058 917
DE-A-2 057 056
US-A-3 589 444
US-A-3 692 113
US-A-3 882 939
US-A-3 946 811
US-A-4 005 749
US-A-4 315 545

(73) Patentinhaber: **DEUTSCHE TEXACO
AKTIENGESELLSCHAFT, Überseering 40, D-2000
Hamburg 60 (DE)**

(72) Erfinder: **Volz, Hartwig, Dr., Dipl.- Chem.,
Westcellertorstrasse 15a, D-3100 Celle (DE)**
Erfinder: **Schnepel, Frank- Michael, Dr., Dipl.-
Chem., Schwarmstedter Strasse 12, D-3109
Jeversen (DE)**

(74) Vertreter: **Schupfner, Gerhard D., Müller,
Schupfner & Gauger Karlstrasse 5 Postfach 14
27, D-2110 Buchholz/Nordheide (DE)**

EP 0 090 920 B1

## Beschreibung

Die Erfindung bezieht sich auf ein Verfahren zur Erdölgewinnung aus einer untertägigen Lagerstätte durch Fluten der Lagerstätte mit einer wäßrigen Lösung die Viskosität erhöhender Polymerer.

Beim Einsatz solcher Polymerlösungen als Flutmedium in der tertiären Erdölgewinnung kann durch wäßrige Lösungen von Polyalkylenglykol geeigneten Molekulargewichtes und/oder durch Zusatz von Polyalkylenglykol zur Polymerlösung selbst die Adsorption des Polymers, insbesondere unter höhersalinen Bedingungen, drastisch reduziert werden und dadurch die Wirtschaftlichkeit des Plutverfahrens wesentlich verbessert bzw. überhaupt erst gewährleistet werden.

Es ist bekannt, daß Erdöllagerstätten um so schlechter durch Wasserfluten entölt werden, je höher deren Ölviskositäten sind. Das im Vergleich zum Öl dünnflüssige Wasser tendiert unter ungünstigen Viskositätsverhältnissen dazu, von einer Injektions- zu einer Produktionsbohrung zu fingern, so daß nur ein geringer Bruchteil der gesamten Öllagerstätte durch das ölverdrängende Flutmedium Wasser erfaßt wird. Der Anteil der gefluteten Lagerstätte und damit auch der Ölgewinn aus einer Lagerstätte kann wesentlich erhöht werden, indem die Viskosität des Flutwassers durch Einlösen hochmolekularer wasserlöslicher Polymere auf ein Vielfaches erhöht wird.

Geeignet für dieses Polymerfluten sind nur wenige Polymerklassen, und zwar sind das in der Reihenfolge ihrer technischen Bedeutung hauptsächlich die Polyacrylamide, die meistens partiell hydrolisiert sind, die Polysaccharide, die biologisch hergestellt werden, die Celluloseether, insbesondere Hydroxyethylcellulose, sowie auch Copolymerisate, die gemäß EP-A2-0 044508 hergestellt werden und aus den Monomeren Vinylsulfonat, Vinylacylamid und Acrylamid bestehen.

Der Einsatz dieser Polymerklassen hat vor- und Nachteile, die im konkreten Anwendungsfall jeweils gegeneinander abgewogen werden müssen.

Polyacrylamide sind langkettige Polymere des Acrylamids mit einem Molekulargewicht von 2 bis 10 Millionen. Bei partiell hydrolisierten Polyacrylamiden ist ein Teil der Amidgruppen zu Carboxylatgruppen verseift. Die partiell hydrolisierten Polyacrylamide sind relativ billig. Die gewünschte Viskositätserhöhung um einen Faktor von 10 bis 40 gegenüber Wasser ist bereits bei Konzentrationen von 0,3 bis 1 kg/m³ erreichbar, allerdings nur in praktisch salzfreiem Wasser. Um die gleichen Viskositätserhöhungen in Salzwässern zu erzielen, benötigt man Konzentrationen von 1,5 bis 4 kg/m³, wobei es bei sehr hohen Salinitäten günstig sein kann, Polyacrylamide mit einem geringen Hydrolysegrad - also einem geringen Anteil an Carboxylatgruppen - zu verwenden.

Polysaccharide sind kondensierte lineare oder auch verzweigte Saccharide, die für die vorliegende Verwendung beispielsweise durch Xanthomonas Campestris oder Fungus Sclerocium mit einem Molekulargewicht von 500.000 bis zu mehreren Millionen, vorzugsweise mit einer Million und mehr, erzeugt werden. Um die 10- bis 40-fache Viskositätserhöhung gegenüber Wasser zu erzielen, benötigt man Konzentrationen zwischen 0,4 und 2 kg/m³, wobei die Viskositätsergiebigkeit weitgehend von der Salinität unabhängig ist. Unter Berücksichtigung des verglichen mit Polyacrylamiden höheren Preises der Polysaccharide wird demnach aus wirtschaftlichen Erwägungen unter niedrigsalinen Bedingungen hauptsächlich Polyacrylamid in Praxis eingesetzt, unter hochsalinen Bedingungen aber in der Regel Polysaccarid.

Daneben sind auch wasserlösliche Celluloseether, insbesondere Hydroxyalkylcellulose mit einer Alkylkettenlänge von $C_1$ bis $C_4$, und insbesondere Hydroxethylcellulose für das Polymerfluten geeignet. Wie Polysaccharide ist Hydroxyethylcellulose wenig salzempfindlich, läßt sich aber, wie auch andere Cellulosederivate, nur mit begrenztem Molekulargewicht herstellen. Zur gewünschten Viskositätserhöhung sind daher Konzentrationen von 2 bis 4 kg/m³ nötig. Aus diesem und aus anderen Gründen ist die praktische Bedeutung der Cellulosederivate in dieser Anwendung begrenzt.

Die gemäß EP-A2-0044 508 hergestellten Copolymerisate aus den Monomeren Vinylsulfonat/Vinylacylsmid/Acrylamid zeigen neben einer sehr guten Viskositätsergiebigkeit eine höhere Elektrolyt- und Thermostabilität als die bisher genannten Polymerklassen. Daher ist diese Produktgruppe besonders für das Polymerfluten unter hochsalinen Bedingungen und bei hohen Lagerstättentemperaturen geeignet.

Die meisten Erdöllagerstätten führen höhersaline Salzwässer; beispielsweise liegt der Gesamtsalzgehalt in norddeutschen Lagerstättenwässern üblicherweise zwischen 120 bis 250 kg/m³. Nach dem Stand der Technik können solche Lagerstätten günstig zunächst mit Süßwasser geflutet werden, um anschließend ein Polymerfluten mit partiell hydrolisierten Polyacrylamiden in Süßwasser durchzuführen.

Dieses Flutverfahren ist aber nicht universell einsetzbar: Manche Erdöllagerstätten enthalten Tone, die in Kontakt mit niedrigsalinen Flutmedien quellen können und so zu einer Blockierung der Lagerstätte führen. Häufig steht Süßwasser nicht in der gewünschten Menge und Qualität zur Verfügung, oder die Versenkkapazitäten für das produzierte Salzwasser sind nicht ausreichend. In diesen Fällen wird man ein Polymerfluten mit einem salzwasserunempfindlichen Polymer in Lagerstättenwasser durchführen, auch wenn die wirtschaftlichen Kenndaten im Vergleich zum Polyacrylamidfluten in Süßwasser ungünstiger sind.

Ein gravierender und die Durchführbarkeit aller Polymerflutverfahren limitierender Faktor ist die Retention. Das Lagerstättengestein, in dessen feinen Poren das Rohöl und Lagerstättenwasser nebeneinander vorliegen, besitzt meist spezifische Oberflächen in der Größenordnung von etwa 0,1 bis 10 m²/g, wobei der tatsächliche Wert stark von Art und Menge der in das Lagerstättengestein eingelagerten Tonmenge abhängig ist. Die für die tertiäre Erdölgewinnung eingesetzten Polymeren werden alle mehr oder weniger stark durch Adsorption an das Lagerstättengestein und insbesondere an die Tone gebunden und gehen dadurch dem Ölverdrängungsprozeß verloren.

Außerdem können die hochmolekularen Polymere auch mechanisch, zum Beispiel durch Verhaken an der Gesteinsoberfläche, zurückgehalten werden, oder auch in toten Porenraumenden oder durch Ausflocken für den Flutprozeß verlorengehen. Der gesamte Polymerverlust (Gesamtretention) setzt sich also aus dem Verlust durch chemische Adsorption und der Retention durch mechanische Effekte (mechanische Retention) zusammen. Es ist bekannt, daß besonders bei Polyacrylamiden der Verlust durch mechanische Retention sehr hoch sein kann.

Liegt der Wert der durch Retention während des Flutprozesses verlorengehenden Polymeren für ein bestimmtes Erdölfeld über dem Wert des durch den Polymereinsatz zusätzlich geförderten Öls, so ist dieses Projekt unter den vorgegebenen Rahmenbedingungen für ein Polymerfluten nicht mehr geeignet. Tatsächlich scheiden in Praxis ein Großteil der bekannten Erdöllagerstätten aufgrund zu hoher Retentionswerte für ein Polymerfluten aus.

Aufgrund dieses Sachverhaltes wurde schon frühzeitig der Versuch unternommen, sogenannte Opferchemikalien vor oder mit den eigentlichen ölverdrängenden Polymeren in die Lagerstätte zu injizieren und durch Vorbelegung von Adsorptionsplätzen so die chemische Adsorption der ölverdrängenden Chemikalie möglichst weitgehend zu verhindern. Ein wesentliches Charakteristikum einer solchen Opferchemikalie ist es, daß im Regelfall der Preis der Opferchemikalie geringer ist als der Preis der zu schützenden Polymeren.

Beim Polyacrylamidfluten wird eine entsprechende, auch "Polymer-Conserving Agent" genannte Chemikalie beispielsweise vorgeschlagen in A.C.Uzoigwe, F.C.Scanlon, R.L. Jewett, "Improvements in Polymer Flooding: The Programmed Slug and the Polymer-Conserving Agent", Journal of Petroleum Technology, Januar 1974, S.33-41. Trotz der intensiven Anstrengungen bei der Aufsuchung neuer und wirksamerer Opferchemikalien ist das Polymerfluten aber nach wie vor kein breit angewendetes Flutverfahren, wesentlich mitbedingt durch die aufgrund hoher Retentionswerte im Regelfall ungünstigen Wirtschaftlichkeitskenndaten.

Aus der Flüssig- und Gaschromatographie ist es bekannt, mit einer Polyethylenglykol- und anschließender thermischer Behandlung silikatisches oder carbonatisches Trägermaterial sehr effektiv zu desaktivieren, G.Alexander "Preparation of Glass Capillary Columns", Chromatographia, Vol 13, Nr. 10, Oktober 1980, S. 657. Dort ist allerdings eine Behandlung bei 280°C erforderlich, und die Desaktivierung kommt dabei vermutlich durch nicht identifizierte thermische Zersetzungsprodukte zustande.

Gemäß US-A 3 692 113 wird ein Polyalkylenglykol mit hohem Molekulargewicht, möglichst > 10⁶, bevorzugt mit Erdalkalien zur weiteren Viskositätserhöhung und Herabsetzung der Mobilität des Flutmediums und dadurch Verminderung der Ausbildung von Kanälen in der Lagerstätte eingesetzt.

Gemäß US-A 3 882 939 wird ein Polyalkylenglykol mit einem Molekulargewicht von 10 000 bis 10 000 000 und bevorzugt von 1 bis 6 Millionen - entsprechend den höchsten am Markt verfügbaren Molekulargewichten - zusammen mit einem Biopolymer in die Lagerstätte injiziert. Der Zweck der Zugabe des Polyalkylenglykols besteht in einer Beeinflussung der Fließeigenschaften der resultierenden Lösung in dem Sinne, daß auch bei höheren Schergefällen - in Praxis also im bohrlochnahen Bereich - höhere scheinbare Viskositäten auftreten. Hierdurch wird in Bohrlochnähe eine verbesserte Mobilitätsregelung des Flutmediums erzielt.

Gemäß US-A 3 946 811 wird mit Polyalkylenglykol vor einer Micellar- oder Polymerlösung geflutet, um den Kontakt zwischen der verdrängenden Flüssigkeit, die empfindlich gegen zwei- oder dreiwertige Ionen ist, und eben diesen Ionen zu verhindern oder zu reduzieren. Auch hier wird bevorzugt Polyethylenglykol mit einem Molekulargewicht von 10⁴ bis 10⁸ und besonders bevorzugt mit einem Molekulargewicht von 1 bis 6 x 10⁶ eingesetzt. Die bevorzugteste Wassersalinität liegt im Bereich mäßiger Salinität zwischen 1 und 20 kg/m³ Gesamtsalzgehalt.

Unter hochsalinen Bedingungen ist die Adsorption von Polymeren für die tertiäre Erdölgewinnung besonders exzessiv, siehe z.B. J. Klein und A. Westerkamp, "Comparative Adsorption Studies Using a Polysaccharide Type Polymer in Oilfield Oriented Model Systems Simulating Enhanced Oil Recovery Conditions", Angew. Makromolekulare Chemie 92 (1980), Fig. 7, S. 24.

Gemäß US-A 4 005 749 wird ein wasserlösliches Polyalkylenoxid mit einem Molekulargewicht > 1200 als Opfersubtanz zur Verminderung der Tensidabsorption bei der Erdölförderung durch Tensidfluten eingesetzt.

Es bestand daher die Aufgabe, ein Verfahren bereitzustellen, das es ermöglicht, sogar unter hochsalinen Bedingungen die Adsorption so weit herabzusetzen, daß ein Fluten mit Polymeren durchgeführt werden kann.

In Lösung der gestellten Aufgabe wurde überraschenderweise gefunden, daß durch Vorfluten mit wäßrigen Lösungen von Polyethylenglykol und/oder Polypropylenglykol mit einem Molekulargewicht von 800 bis 2500

ausgenommen 1200 bis 2500 und/oder durch Zusätze von einem dieser Polyalkylenglykole des angegebenen Molekulargewichtsbereiches zur Polymerlösung oder -dispersion selbst beim Polymerfluten in einer Lagerstätte mit hochsalinem Haftwasser die Adsorption der Polymere drastisch reduziert wird. Es können auch Copolymerisate von Ethylenoxid/Propylenoxid im angegebenen Molekulargewichtsbereich, insbesondere solche mit einem größeren Anteil an Ethylenoxid, eingesetzt werden.

Eine bereits erfolgte Adsorption des Polysaccharids bzw. Copolymers in der Lagerstätte kann sogar durch Nachfluten mit der Polyalkylenlösung weitgehend wieder rückgängig gemacht werden. Das Ergebnis des erfindungsgemäßen Verfahrens ist überraschend, da es nur mit dem Polyalkylenglykol im angegebenen Molekulargewichtsbereich erzielbar ist. Höher oder niedriger molekulares Polyalkylenglykol ist zur Adsorptionsverhinderung von Polysacchariden und den genannten Copolymeren in hochsalinen Lagerstätten wenig oder nicht geeignet.

Abhängig von der Polymerklasse kann die Reduktion der Polymerretention in Flutexperimenten mehr oder weniger wirkungsvoll gestaltet werden. Besonders wirkungsvoll wird die Retention von Polysacchariden und Alkylcellulose wie Hydroxyalkylcellulose verhindert; bei Polyacrylamiden wurden weniger günstige Ergebnisse erhalten, die Copolymere aus den Monomeren Vinylsulfonat, Vinylacylamid und Acrylamid nehmen eine Mittelstellung ein. Es wird vermutet, daß die unterschiedlichen Ergebnisse durch die unterschiedlichen Mechanismen der Polymergesamtretention verursacht werden: nur die chemische Adsorption kann durch das Polyalkylenglykol beeinflußt werden, nicht aber die mechanische Retention.

Erfindungsgemäß wird bevorzugt Polyethylenglykol mit einem Molekulargewicht von 800 bis 2 500 ausgenommen 122 bis 2500 eingesetzt. Das optimale Molekulargewicht des bevorzugt eingesetzten Polyethylenglykols liegt um 1 000. Die optimale Polyethylenglykolmenge richtet sich nach der Adsorptionskapazität der Lagerstätte und muß in Laborversuchen ermittelt werden, beispielsweise wie in der Versuchsreihe, deren Ergebnisse weiter unten in Tabelle III dargestellt sind. Mögliche Einsatzkonzentrationen können zwischen etwa 1 bis 100 kg/m$^3$ Polyethylenglykol liegen, aus den Laborversuchen ergeben sich dann optimale Sluggrößen von wenigen Kubikmetern bis etwa 1 Porenvolumen (PV). Letztlich ist immer die absolute benötigte Polyethylenglykoleinsatzmenge entscheidend, die je nach Lagerstättenmaterial zwischen etwa 20 und 500 µg Polyethylenglykol pro g kontaktierten Lagerstättengesteins liegen kann.

Die Polymereinsatzkonzentration wird nach dem Stand der Technik so gewählt, daß sich bei einem Schergefälle von 1 s$^{-1}$ Viskositäten ergeben, die etwa bei dem 10- bis 50-fachen der Wasserviskositäten liegen. Daraus ergeben sich Einsatzkonzentrationen zwischen etwa 0,4 und 3 kg/m$^3$ aktiver Polymersubstanz, abhängig von der Viskositätsergiebigkeit des tatsächlich verwendeten Produkts und den Lagerstättenbedingungen, insbesondere der Temperatur und der Salinität. Die optimale Polymersluggröße wird nach dem Stand der Technik durch Computersimulation ermittelt und kann zwischen 0,1 und 1 PV und üblicherweise zwischen 0,3 und 0,8 PV betragen, wobei üblicherweise gegen Ende des Slugs die Konzentration gegen Null abgestuft wird.

Die folgenden experimentellen Befunde beziehen sich auf Polyethylenglykol, sind jedoch entsprechend auch vom Polypropylenglykol ableitbar.

### Beispiel 1

Die Löslichkeit von Polyethylenglykol (PEG) ist stark von der Temperatur und dem Salzgehalt des Anmischwassers sowie von dem Molekulargewicht des Polyethylenglykols abhängig. Mit zunehmendem Salzgehalt, zunehmender Temperatur und zunehmendem Molekulargewicht des PEG nimmt die Löslichkeit ab. Für die Bedingungen einer norddeutschen Lagerstätte (Temperatur 60° C, Gesamtsalzgehalt 170 kg/m$^3$, davon 7,4 kg/m$^3$ zweiwertige Kationen) wurden die Löslichkeiten von PEG mit variierendem Molekulargewicht durch Messungen des sog. Trübungspunktes (cloud point) geprüft. Hierbei wurden die PEG in einer Konzentration von 2 g/l in synthetischem (aus Chemikalien in destilliertem Wasser aufgemischtem) Lagerstättenwasser von 170 kg/m$^3$ Gesamtsalzgehalt gelöst; anschließend wurde die Lösung erhitzt und die Temperatur gemessen, bei der die Lösung sich trübte, d. h. die PEG sich entlösten.

Tabelle I zeigt die Trübungstemperatur als Funktion des Molekulargewichts des PEG.

### Tabelle I

| Bezeichnung | Hersteller | ungefähres Molekulargew. (g/Mol) | Trübungs- temperatur (°C) |
|---|---|---|---|
| PEG 600 | Hoechst AG | 600 | >103 |
| PEG 1 000 | " | 1 000 | >103 |
| PEG 10 000 | " | 10 000 | 73 bis 75 |
| PEG 35 000 | " | 35 000 | 63,5 " 65 |
| Polyox Coagulant | Union Carbide | 5000 000 | 52 " 54 |

Demnach ist das höchstmolekulare Produkt unter den interessierenden Lagerstättenbedingungen nicht mehr löslich.

## Beispiel 2

Das bei den Retentionsmessungen zum Einsatz gekommene Polysaccharid war das Produkt Rhodopol 23 RA der Firma Rhône Poulenc, ein durch Xanthomonas Campestris hergestelltes Polysaccharid mit einem Molekulargewicht von mehreren Millionen. Es besteht hauptsächlich aus den Monosacchariden Glucose und Mannose sowie aus einem geringeren Anteil an Glucuronsäuresalzen.

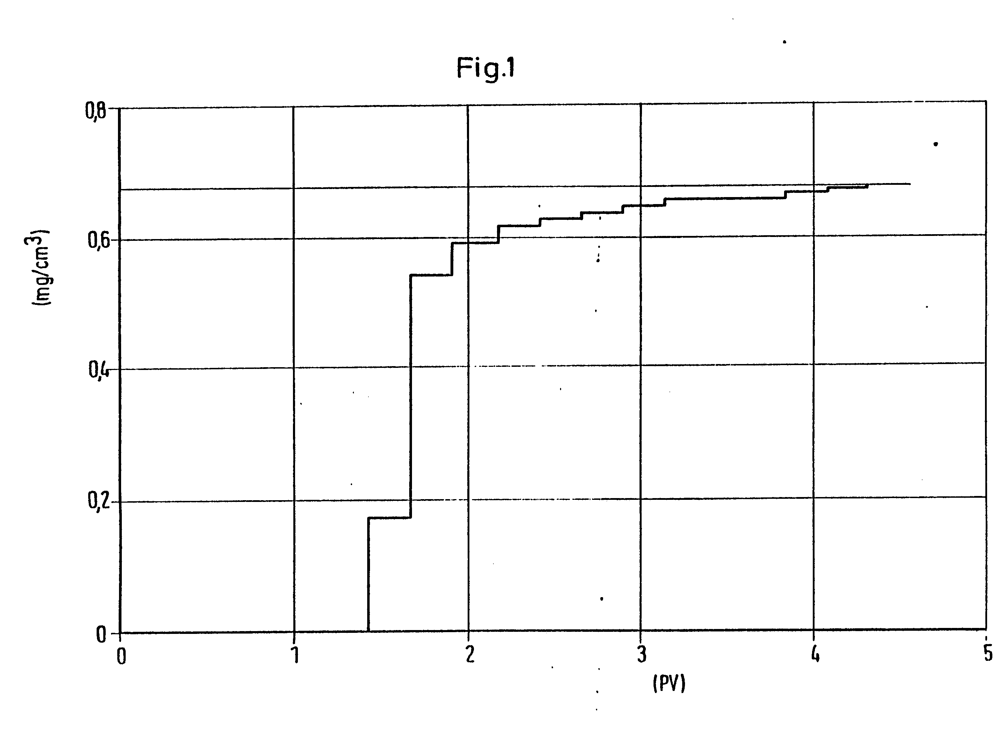

Die Messung der Polysaccharidgesamtretention erfolgte derart, daß eine mit synthetischem Lagerstättenwasser befüllte, ölfreie Packung mit zerstoßenem Kernmaterial bei 60°C mit Polysaccharidlösung geflutet und im Auslauf jeweils die Polysaccharidkonzentration rheometrisch bestimmt wurde. Aus dem verspäteten Durchbruch des Polymers kann dann unter Berücksichtigung der Totvolumina am Anfang und Ende der Packung die fehlende Polymermenge und daraus die Polymergesamtretention berechnet werden - siehe Figur 1, worin die Polymerkonzentration im Auslauf in mg/cm$^3$ gegen die injizierte Polymerlösung in Porenvolumina (PV) aufgetragen ist. Die Packungslänge betrug in den Versuchsreihen 28 bis 30 cm, der Querschnitt 2,8 bis 3 cm. Charakteristisch betrugen die Kernmaterialeinwaagen etwa 300 g, die sich ergebenden Porenvolumina (PV) etwa 65 bis 70 cm$^3$. Die Polysaccharidkonzentrationen lagen zwischen 0,64 und 0,70 g/l, die Verpumpungsraten bei 4 cm$^3$/h.

In einer ersten Versuchsreihe wurde an Kernmaterial einer norddeutschen Lagerstätte als Opfersubstanz PEG unter Variation des Molekulargewichts getestet. Hierbei wurde das PEG in einer Konzentration von 2 kg/m$^3$ mit 0,3 bis 0,4 Porenvolumina (PV) vor der Polymerlösung in synthetischem Lagerstättenwasser injiziert.

Tabelle II zeigt die Ergebnisse.

### Tabelle II

| Versuch Nr. | Molekulargewicht der Opfersubstanz (g/Mol) | Flutmenge (PV) | Retention des Polysaccharids (µg/g) |
|---|---|---|---|
| 1 | | ohne Vorfluten | 116 |
| 2 | | ohne Vorfluten | 131 |
| 3 | 600 | 0,4 | 71 |
| 4 | 1 000 | 0,3 | 10 |
| 5 | 6 000 | 0,3 | 87 |

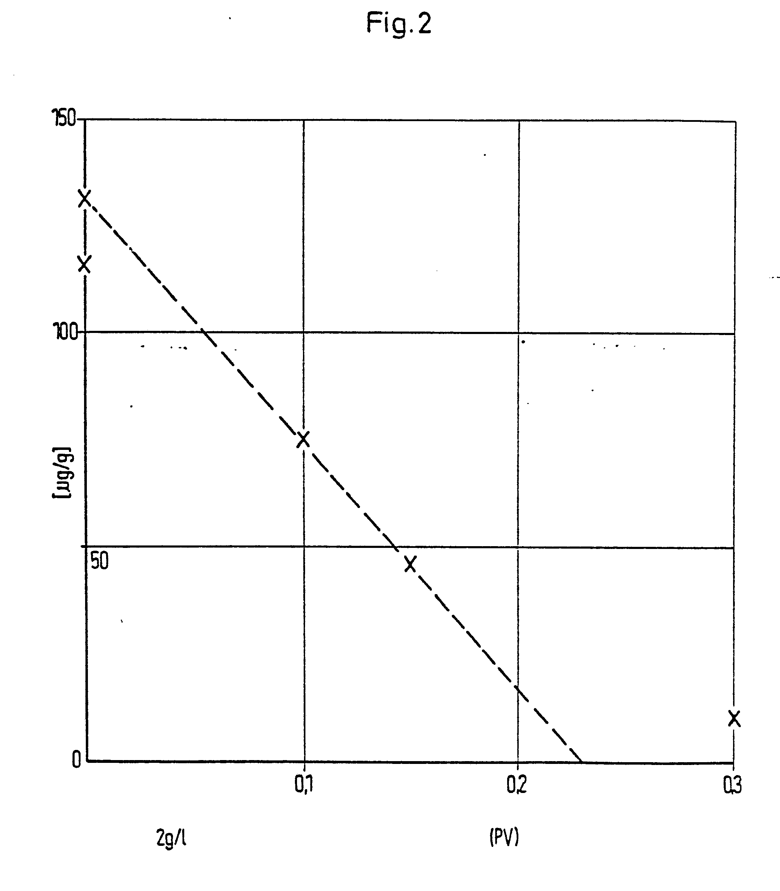

Das PEG mit einem Molekulargewicht von etwa 1 000 war also am wirkungsvollsten. Mit diesem Produkt wurde anschließend bei gleicher Einsatzkonzentration von 2 kg/m$^3$ die Flutmenge variiert zur Ermittlung der absolut benötigten PEG-Menge. Die Ergebnisse sind in Tabelle III und in Figur 2 dargestellt.

### Tabelle III

| Versuch Nr. | Flutmenge des PEG 1 000 (PV) | Retention des Polysaccharids (µg/g) |
|---|---|---|
| 6 | ohne Vorfluten | 116 |
| 7 | ohne Vorfluten | 131 |
| 8 | 0,1 | 75 |
| 9 | 0,15 | 45,6 |
| 10 | 0,3 | 10,0 |

Die graphische Darstellung der Ergebnisse zeigt, daß unter den speziellen Versuchsbedingungen etwa 0,23 PV benötigt werden, um die optimale Reduktion in der Polymerretention zu erreichen, entsprechend ca. 92 µg PEG 1000 pro g Gestein.

## Beispiel 3

An Kernmaterial einer anderen norddeutschen Lagerstätte wurden zusätzliche Retentionswerte, auch mit höhermolekularen PEG als Opfersubstanz, bestimmt. Die Ergebnisse sind in Tabelle IV zusammengestellt:

### Tabelle IV

| Versuch Nr. | Molekulargewicht der Opfersubstanz (g/Mol) | Flutmenge (PV) | Retention des Polysaccharids (µg/g) |
|---|---|---|---|
| 11 | | ohne Vorfluten | 118 |
| 12 | 1 000 | 0,26 | 29 |
| 13 | 10 000 | 0,30 | 67 |
| 14 | 35 000 | 0,30 | 67 |

Auch hier ist also PEG 1 000 am wirksamsten.

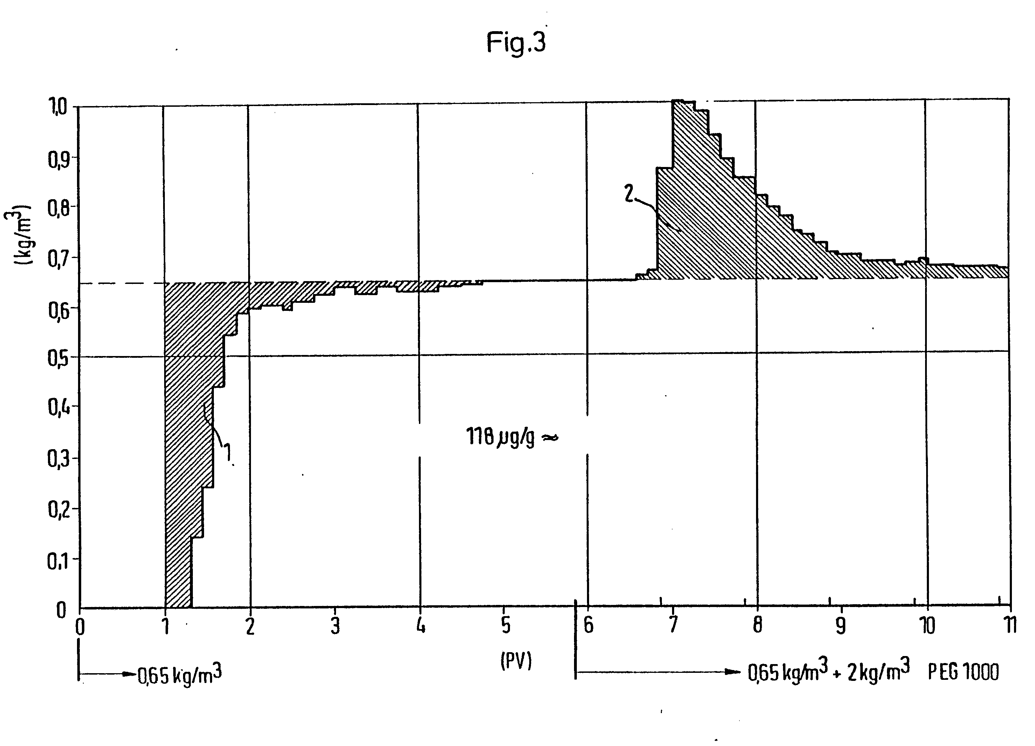

In Versuch 11 wurde zunächst kein PEG injiziert. Nach einem Injektionsvolumen von 5,8 PV Polysaccharidlösung wurde das Polysaccharid zusammen mit 2 kg/m$^3$ PEG 1000 injiziert. Wie aus Figur 3 zu ersehen ist, konnte im Rahmen der Meßgenauigkeit das adsorbierte Polysaccharid vollständig desorbiert werden. Im Vergleich zu Polysaccharid wird das PEG 1 000 demnach spezifisch adsorbiert.

Durch Zugabe von PEG zur zweiten Hälfte des Polysaccharidslugs können in der Lagerstätte, bedingt durch den Desorptionseffekt, sehr hohe Konzentrationen und damit sehr hohe scheinbare Viskositäten erzeugt werden. Vergleichbar hohe Polysaccharidkonzentrationen könnten, wenn überhaupt, ohne PEG-Einsatz nur bei sehr hohen Injektionsdrücken oder niedrigen Injektionsraten realisiert werden.

Falls sich in einer späteren Phase eines Polysaccharidflutens herausstellt, daß aufgrund zu hoher Adsorptionswerte des Polysaccharids der Fluteffekt nur gering ist, kann er durch nachträgliche Injektion von PEG 1 000 noch verbessert werden.

**Beispiel 4**

Aufgrund dieser Ergebnisse wurden analoge Versuche am Material einer weiteren norddeutschen Lagerstätte (Gesamtsalzgehalt 140 kg/m³, Temperatur 90°C) durchgeführt, wobei wegen der hohen Temperatur anstelle eines Polysaccharids die gemäß EP-A2-0044 508 hergestellten Copolymere aus Vinylsulfonat, Vinylacylamid und Acrylamid mit einem Molekulargewicht von mehreren Millionen eingesetzt wurden. Die folgenden Ergebnisse beziehen sich auf ein von der Firma Hoechst AG zur Verfügung gestelltes Labormuster.

Zur Bestimmung der Polymergesamtretention wurde eine mit synthetischem Lagerstättenwasser befüllte, ölfreie Packung aus zerstoßenem Kernmaterial bei 90°C mit 1,5 bis 2 Porenvolumina (PV) Copolymerlösung geflutet und die jeweilige Copolymerkonzentration im Auslauf rheometrisch bestimmt.

Die Einsatzkonzentration des Copolymers betrug 1,2 g/l; außerdem wurde Kaliumthiocyanat als Tracer zugefügt (entspr. 5 g/l Thiocyanationen). Im übrigen wurden die oben beschriebenen experimentellen Parameter übernommen.

Um die Reduzierung der Retention des Copolymers durch den Einsatz von Polyethylenglykol zu ermitteln, wurden Lösungen mit verschiedenen Konzentrationen von PEG 1 000 bei einer Sluggröße von 0,4 PV als Vorflut-Slug injiziert.

Die Ergebnisse sind in Tabelle V zusammengefaßt.

**Tabelle V**

| Versuch Nr. | Konzentration des PEG 1 000 (g/l) | Einsatzmenge aes PEG 1 000 (µg/g Kern- material) | Retention des Copolymers (µg/g) |
|---|---|---|---|
| 15 | | ohne Vorfluten | 149 |
| 16 | 2 | 205 | 41 |
| 17 | 4 | 410 | 43 |

Eine Einsatzmenge von etwa 200 µg PEG 1 000 pro g Kernmaterial ist ausreichend, um den Gesamtverlust an Copolymer auf etwa 27 % zu reduzieren. Eine größere PEG 1000-Menge ergibt (im Rahmen der Meßgenauigkeit) die gleichen Werte.

**Beispiel 5**

In einer weiteren Versuchsreihe wurde untersucht, inwieweit die Injektion von PEG 1 000 zu einem späteren Zeitpunkt der Flutfolge die Desorption des bereits adsorbierten Copolymers bewirken kann. Daher wurde die als ausreichend ermittelte PEG 1 000-Menge in die letzten 0,2 PV des Copolymerslugs eingelöst; ein Vorflutslug wurde bei dieser Versuchsreihe nicht injiziert.

Tabelle VI zeigt die Ergebnisse.

**Tabelle VI**

| Versuch Nr. | Einsatzmenge des PEG 1 000 (µg/g Kern- material) | Retention des Copolymeren (µg/g) |
|---|---|---|
| 18 | ohne PEG 1 000 | 149 |
| 19 | 205 | 87 |

Die Retention wird auf etwa 58 % reduziert. Durch PEG 1 000 kann also bereits adsorbiertes Copolymer teilweise desorbiert werden; der Effekt ist jedoch schwächer als im oben beschriebenen Beispiel des Polysaccharideinsatzes; relativ zum Copolymer scheint die PEG-Adsorption weniger spezifisch zu sein oder der Copolymerverlust wird stärker durch mechanische Retention bestimmt.

**Beispiel 6**

Unter den gleichen Bedingungen wie mit diesem Copolymeren wurden auch Retentionsversuche mit dem Produkt Sepaflood CE 5093 von BASF durchgeführt. Sepaflood CE 5093 ist ein Polyacrylamid mit einem niedrigen Hydrolysegrad von etwa 3 % und einem Molekulargewicht von mehreren Millionen. Tabelle VII zeigt die Ergebnisse.

**Tabelle VII**

| Polymer | Polymer Retention (µg/g) |  |
|---|---|---|
|  | mit PEG | ohne PEG Vorfluten |
| CE 5093 | 189 | 212 |

Der Effekt ist hier nun noch gering, vermutlich weil es zu einer hohen mechanischen Retention oder auch zu Ausflockungen des Polyacrylamids kommt.

Das erfindungsgemäße Verfahren ist für das Fluten mit Polymeren, insbesondere hydrophilen Polymeren, welche zur chemischen Adsorption am Formationsgestein neigen, ebenso geeignet wie für andere Verfahren zum Sekundärfluten mit wäßrigen viskosen Lösungen oder Dispersionen dieser Polymeren, wenn beispielsweise die wäßrigviskose Lösung zur Mobilitätskontrolle eingesetzt wird. Neben den beschriebenen Polymeren können weitere Substanzen, wie Biozide, Tenside, Sauerstoffänger zum Einsatz gelangen.

## Patentansprüche

1. Verfahren zur Gewinnung von Erdöl aus einer untertägigen, Erdöl führenden, hochsalines Haft- oder Flutwasser enthaltenden Lagerstätte, die zumindest von je einer Injektionsbohrung und einer Förderbohrung durchteuft ist, welche mit der Lagerstätte in Verbindungen stehan, durch Injektion einer wäßrig viskosen Lösung eines Polysaccharids, einer Hydroxyalkylcellulose, eines hydrophilen Polyacrylamids oder eines hydrophilen Copolymeren aus Vinyl- und Acrylamid-Monomeren,
  dadurch gekennzeichnet,
  daß eine wäßrige Lösung von Polyethylenglykol und/ oder Polypropylenglykol oder einem Copolymerisat von Ethylenoxid/Propylenoxid eines Molekulargewichts von 800 bis 2500, ausgenommen 1200 bis 2500, vor- oder nachinjiziert wird oder das Polyethylenglykol und/oder Polypropylenglykol bzw. das Copolymerisat zusammen mit dem Polymer injiziert wird.

2. Verfahren nach Anspruch 1, dadurch gekennzeichnet, daß Polyethylenglykol injiziert wird.

## Claims

1. A process for recovering oil from a subterranean oil-bearing formation containing high-salinity connate or flooding water, the formation being penetrated by at least one injection well and one production well which are in connection with the formation, by injection of an aqueous viscous solution of a polysaccharide, a hydroxyalkylcellulose, a hydrophilic polyacrylamide or a hydrophylic vinyl acrylamide copolymer,
  characterized in
  that an aqueous solution of polyethylene glycol and/or polypropylene glycol or of a copolymer of ethylene oxide/propylene oxide having a molecular weight of from 800 to 2500, excepting 1200 to 2500, is either pre- or post-injected, or that polyethylene glycol and/or polypropylene glycol or, respectively, the copolymer is injected together with the polymer.

2. A process according to claim 1, characterized in that polyethylene glycol is injected.

## Revendications

1. Procédé pour récupérer le pétrole d'un gisement souterrain de pétrole et contenant de l'eau adhérente ou injectée à salinité élevée, que traversent au moins un puits d'injection et un puits de sondage qui sont en communication avec le gisement par injection d'une solution aqueuse visqueuse d'un polysaccharide, d'une hydroxyalkylcellulose, d'un polycrylamide hydrophile ou d'un copolymère hydrophile de monomères vinyliques et d'acrylamide monomère, procédé caractérisé en ce qu'on injecte, préalablement ou ultérieurement, une solution aqueuse de polyéthylèneglycol et/ou de polypropylèneglycol ou d'un copolymère d'oxyde d'éthylène/oxyde de propylène ayant un poids moléculaire de 800 à 2500, notamment 1200 à 2500, ou bien en ce qu'on injecte avec le polymère le polyéthylèneglycol et/ou le polypropylèneglycol ou le copolymère.

2. Procédé selon la revendication 1, caractérisé en ce qu'on injecte du polyéthylèneglycol.

Fig.1

(PV)

(mg/cm³)

0,8   0,90   0,70   0,2   0

0   1   2   3   4   5

## Fig. 2

3

Fig.3